# EUROPÄISCHE PATENTSCHRIFT

(11) **EP 2 454 030 B1**
(45) Veröffentlichungstag und Bekanntmachung des Hinweises auf die Patenterteilung: **11.09.2013**
(21) Anmeldenummer: 10729918.2
(22) Anmeldetag: 09.07.2010
(51) Int. Cl.: B08B 1/04, A47L 11/40

(54) **REINIGUNGSVORRICHTUNG SOWIE VERFAHREN ZUR KONTROLLE DES ZUGRIFFS AUF EINE REINIGUNGSVORRICHTUNG**
CLEANING DEVICE AND METHOD FOR CONTROLLING THE ACCESS TO A CLEANING DEVICE
DISPOSITIF DE NETTOYAGE ET PROCÉDÉ DE CONTRÔLE DE L'ACCÈS À UN DISPOSITIF DE NETTOYAGE

(30) Priorität: 14.07.2009 DE 102009033944
(43) Veröffentlichungstag der Anmeldung: 23.05.2012
(73) Patentinhaber: Alfred Kärcher GmbH & Co. KG, 71364 Winnenden (DE)
(72) Erfinder: DÜNNE, Markus, 71364 Winnenden (DE); HOFNER, Christian, 73642 Welzheim (DE); WALZ, Jürgen, 74219 Möckmühl (DE)
(74) Vertreter: Hoeger, Stellrecht & Partner Patentanwälte
(86) Internationale Anmeldenummer: PCT/EP2010/059875
(87) Internationale Veröffentlichungsnummer: WO 2011/006843

(56) Entgegenhaltungen:
- EP-A2- 0 844 030
- EP-A2- 1 927 408
- DE-A1-102008 009 221
- US-A1- 2008 099 045

## Beschreibung

Die Erfindung betrifft eine Reinigungsvorrichtung, umfassend eine Bedieneinheit zur Bedienung der Reinigungsvorrichtung, mindestens eine Funktionseinheit zur Ausführung einer Bedienanweisung, welche mindestens eine Funktionseinheit als Reinigungswerkzeug, als Antriebseinrichtung oder als Reinigungsmitteldosiereinrichtung ausgestaltet ist, sowie eine Steuereinheit zum Entgegennehmen von an der Bedieneinheit vorgenommenen Bedienanweisungen und darauf basierender Ansteuerung der mindestens einen Funktionseinheit, wobei zum Betrieb der Reinigungsvorrichtung eine auf einem Berechtigungsträger hinterlegte Zugriffsberechtigung erforderlich ist.

Außerdem betrifft die Erfindung ein Verfahren zur Kontrolle des Zugriffs auf eine Reinigungsvorrichtung, wobei die Reinigungsvorrichtung eine Bedieneinheit zur Bedienung der Reinigungsvorrichtung und mindestens eine Funktionseinheit zur Ausführung einer Bedienanweisung umfasst, welche mindestens eine Funktionseinheit als Reinigungswerkzeug, als Antriebseinrichtung oder als Reinigungsmitteldosiereinrichtung ausgestaltet ist, wobei die Reinigungsvorrichtung ferner eine Steuereinheit zum Entgegennehmen von an der Bedieneinheit vorgenommenen Bedienanweisungen und darauf basierender Ansteuerung der mindestens einen Funktionseinheit umfasst und wobei zum Betrieb der Reinigungsvorrichtung eine auf einem Berechtigungsträger hinterlegte Zugriffsberechtigung erforderlich ist.

Bei einer Reinigungsvorrichtung der eingangs genannten Art erfolgt eine Zugriffskontrolle anhand eines Berechtigungsträgers, z.B. in Form eines Schlüssels, auf dem eine Zugriffsberechtigung hinterlegt ist. Die Zugriffskontrolle wird durchgeführt, um sicherzustellen, dass nur ein autorisierter und eingewiesener Benutzer die Reinigungsvorrichtung bedient. Auf diese Weise soll eine Fehlbedienung und ein damit verbundenes Schadensrisiko nicht nur für die Reinigungsvorrichtung, sondern auch für den Bediener oder Dritte vermieden werden. Beispiele für Reinigungsgeräte, deren Betrieb eine Zugriffsberechtigung erfordert, sind Scheuersaugmaschinen, fahrbare Kehrmaschinen, beide sowohl als sogenannte "Walk behind"-Maschinen, bei welchen der Benutzer die Maschinen von der Rückseite steuert, als auch als Aufsitzmaschinen. Des Weiteren existieren zum Beispiel auch mittels eines Reinigungsstrahls arbeitende Reinigungsvorrichtungen, deren Betrieb eine Zugriffsberechtigung erfordert. Hierzu zählen Hochdruckreinigungsgeräte, insbesondere beheizbare Hochdruckreinigungsgeräte, oder Partikelstrahlgeräte, insbesondere Trockeneisstrahlgeräte.

Entsprechend den vorstehenden Beispielen kann die mindestens eine Funktionseinheit auf vielfache Weise ausgebildet sein. Bei ihr kann es sich beispielsweise um ein Reinigungswerkzeug, insbesondere ein Bürstenwerkzeug, handeln, um eine Antriebseinrichtung oder um eine Reinigungsmitteldosiereinrichtung.

Die EP 0 844 030 A2 beschreibt eine Abzugswerkbank und ein Betriebsverfahren für diese, wobei die Abzugswerkbank einen Arbeitsraum aufweist, der durch wenigstens eine Eingriffsöffnung von außen zugänglich ist, eine Lüftung zum Absaugen von mit Gefahrstoffen kontaminierter Luft aus dem Arbeitsraum und einer Steuerung für mindestens einen Betrieb der Abzugswerkbank. Die Eingriffsöffnung ist verschließbar, und die Steuerung enthält Prüfeinrichtungen, durch die eine Zugangsberechtigung einer Person zum Arbeitsraum feststellbar und ein Öffnen der verschlossenen Eingriffsöffnung in Abhängigkeit von einer festgestellten Zugangsberechtigung auslösbar ist.

Die US 2008/0099045 A1 beschreibt ein System zum Bereitstellen automatisierter Waschvorgänge und zum Gewährleisten einer korrekten Benutzung. Das System erlaubt die Identifizierung individueller Benutzer einer oder mehrerer Reinigungsstationen durch unterschiedliche Technologien wie beispielsweise RFID. Die Benutzung der Reinigungsstationen durch einzelne Benutzer wird überwacht, um sicherzustellen, dass Regeln zum Waschen der Hände eingehalten werden.

Aufgabe der vorliegenden Erfindung ist es, eine Reinigungsvorrichtung sowie ein Verfahren zur Kontrolle des Zugriffs auf eine Reinigungsvorrichtung bereitzustellen, bei der bzw. mit dem eine benutzerfreundlichere Zugriffskontrolle ermöglicht wird.

Diese Aufgabe wird erfindungsgemäß durch eine Reinigungsvorrichtung mit den Merkmalen von Anspruch 1 gelöst.

Bei der erfindungsgemäßen Reinigungsvorrichtung kommt eine Erfassungseinheit zum Einsatz, mit der die auf dem Berechtigungsträger hinterlegte Zugriffsberechtigung berührungslos erfasst werden kann. Die berührungslos erfasste Zugriffsberechtigung wird an die Steuereinheit übermittelt, von der sie hinsichtlich ihrer Gültigkeit überprüft wird. Die berührungslose Zugriffskontrolle stellt sich für einen Benutzer der Reinigungsvorrichtung benutzerfreundlicher dar. Insbesondere kann eine mechanische Erfassung der Zugriffsberechtigung durch die Reinigungsvorrichtung, insbesondere anhand eines Schlüssels, entfallen.

Vorzugsweise umfasst die Reinigungsvorrichtung eine mit der Steuereinheit in Wirkverbindung stehende Speichereinheit, in der der Zugriffsberechtigung zugeordnete Informationen betreffend den Benutzer speicherbar sind zur Zuordnung der Zugriffsberechtigung zu einem bestimmten Benutzer durch die Steuereinheit. In der Speichereinheit sind Informationen betreffend den Benutzer speicherbar und insbesondere modifizierbar speicherbar. Nachdem ihr die erfasste Zugriffsberechtigung übermittelt worden ist, kann die Steuereinheit anhand der in der Speichereinheit gespeicherten Informationen ermitteln, welcher Benutzer im Besitz der erfassten Zugriffsberechtigung sein sollte. Auf diese Weise kann von der Steuereinheit der die Reinigungsvorrichtung in Betrieb nehmende Benutzer identifiziert werden.

Es kann vorgesehen sein, dass die Informationen in der Speichereinheit bei erstmaliger Inbetriebnahme der Reinigungsvorrichtung darin abgespeichert werden. Möglich ist es auch, die Informationen zu verändern, insbesondere zu ergänzen oder zu löschen. Dementsprechend können Benutzerinformationen für mehr als nur eine Zugriffsberechtigung angelegt und modifiziert werden, insbesondere der Speichereinheit hinzugefügt werden oder aus dieser gelöscht werden.

Günstig ist es, wenn in der Speichereinheit der Zugriffsberechtigung zugeordnete Informationen betreffend eine Berechtigungsstufe des Benutzers und/oder ein Bedienprofil des Benutzers für die Reinigungsvorrichtung speicherbar sind. Dies gibt die Möglichkeit, mittels der Steuereinheit zu ermitteln, welche Berechtigungsstufe mit der erfassten Zugriffsberechtigung verknüpft ist. So können verschiedene Berechtigungsstufen für die Reinigungsvorrichtung vorgesehen sein, zum Beispiel eine Berechtigungsstufe, die nur zum Reinigungsbetrieb berechtigt, und/oder eine Berechtigungsstufe, die zur Wartung und zum Service der Reinigungsbetrieb berechtigt. Möglich ist auch eine Staffelung der Berechtigungsstufen, bei der mittels der Zugriffsberechtigung nicht alle, sondern nur ausgewählte Funktionseinheiten der Reinigungsvorrichtung betrieben werden können. Darüber hinaus ist bei dieser Ausgestaltung der Reinigungsvorrichtung die Möglichkeit gegeben, auf Basis der erfassten Zugriffsberechtigung ein Bedienprofil für den Benutzer aus der Speichereinheit auszulesen. Auf Basis des ermittelten Bedienprofils kann die Reinigungsvorrichtung zum Beispiel bevorzugte Benutzereinstellungen selbsttätig vor dem eigentlichen Reinigungsbetrieb vornehmen. So kann etwa in einem Bedienprofil gespeichert sein, dass der der Zugriffsberechtigung zugeordnete Benutzer nur Böden bestimmter Beschaffenheit reinigt, so dass Voreinstellungen der Reinigungsvorrichtung betreffend ein Reinigungswerkzeug und eine Dosierung einer Reinigungsflüssigkeit vorgenommen werden können. Es ist auch möglich, dass an einer Anzeigeeinrichtung der Bedieneinheit Statusinformationen zur Reinigungsvorrichtung in einer dem Benutzer vertrauten Sprache angezeigt werden.

Von Vorteil ist es, wenn die Erfassungseinheit eine Einrichtung zur Erfassung der Zugriffsberechtigung mittels elektromagnetischer Strahlung umfasst. Mittels der Einrichtung, bei der es sich insbesondere um eine Empfangseinrichtung für elektromagnetische Strahlung handelt, kann die Zugriffsberechtigung berührungslos erfasst werden. Es ist auch möglich, dass die Einrichtung zusätzlich als Sendeeinrichtung zum Aussenden elektromagnetischer Strahlung ausgebildet ist und zum Beispiel anhand einer Modifikation der von ihr ausgesendeten Strahlung durch einen Berechtigungsträger erfassen kann, ob die Modifikation auf Basis einer im Berechtigungsträger hinterlegten Zugriffsberechtigung erfolgt.

Als von der Einrichtung erfassbare elektromagnetische Strahlung kann jegliche Strahlung des elektromagnetischen Spektrums zum Einsatz kommen, insbesondere Strahlung im Kurz- oder Ultrakurzwellenbereich, im Mikrowellenbereich, im Infrarotbereich oder im Bereich des sichtbaren Spektrums. In der Praxis hat sich eine Eignung der Einrichtung zur Erfassung von Strahlung im Kurz- und/oder Ultrakurzwellenbereich bewährt.

Möglich ist auch die Nutzung von Ultraschall zur Erfassung der Zugriffsberechtigung durch die Erfassungseinheit.

Vorzugsweise ist die Einrichtung als RFID-Lesegerät ausgebildet. Mittels des RFID-Lesegerätes kann eine auf dem Berechtigungsträger hinterlegte Zugriffsberechtigung, die sogenannte "ID" (ein Identifikationscode), mittels elektromagnetischer Strahlung erfasst werden. Das RFID-Lesegerät sendet hierbei vorzugsweise elektromagnetische Strahlung aus, welche aufgrund der auf dem Berechtigungsträger hinterlegten Zugriffsberechtigung eine Modifikation erfährt, die von dem RFID-Lesegerät erfasst werden kann. Die Modifikation erfolgt dabei in Abhängigkeit von der Zugriffsberechtigung, so dass auf diese Weise von dem RFID-Lesegerät die Zugriffsberechtigung erfasst werden und anschließend von der Steuereinheit überprüft werden kann.

Bei einer andersartigen Weiterbildung der Reinigungsvorrichtung kann vorgesehen sein, dass die Einrichtung als passives RFID-Gerät ausgebildet ist, welche von einem aktiv ausgebildeten RFID-Gerät, nämlich einem Berechtigungsträger, die auf ihm hinterlegte Zugriffsberechtigung übermittelt bekommt und sie auf diese Weise erfasst. Ferner kann vorgesehen sein, dass sowohl die Einrichtung als auch der Berechtigungsträger aktive RFID-Geräte sind.

Vorteilhafterweise bildet die Einrichtung eine NFC-Schnittstelle aus. Bei der NFC-Schnittstelle (NFC = "Near Field Communication") handelt es sich um eine standardisierte Schnittstelle für einen kurzreichweitigen Übertragungsstandard, bei welchem ein Verbindungsaufbau ad hoc, d.h. ohne vorheriges Austauschen von gegenseitigen Erkennungscodes, erfolgen kann. Dies gibt zum einen die Möglichkeit, die Zugriffsberechtigung durch die Erfassungseinheit erst dann zu erfassen, wenn der Berechtigungsträger allenfalls einen Maximalabstand von der Erfassungseinheit aufweist. Dieser Maximalabstand liegt typischerweise im Bereich von wenigen Zentimetern, so dass ein Benutzer den Berechtigungsträger bewusst nahe der Reinigungsvorrichtung anordnen muss, um diese in Betrieb zu nehmen. Zum anderen ist durch den Einsatz der Einrichtung als NFC-Schnittstelle eine zügige Inbetriebnahme der Reinigungsvorrichtung möglich. Eine Erfassung der Zugriffsberechtigung kann erfolgen, ohne dass zuvor zwischen der Erfassungseinheit und dem Berechtigungsträger ein Erkennungscode zum Aufbau einer Datenverbindung ausgetauscht werden muss. Schließlich erlaubt der Einsatz einer NFC-Schnittstelle an der Erfassungseinheit, NFC-fähige Geräte, insbesondere Mobiltelefone oder Laptops, als Berechtigungsträger einzusetzen. Darüber hinaus kann über die NFC-Schnittstelle weiterer Datenaustausch mit externen Kommunikationsvorrichtungen stattfinden, der nicht unbedingt im Zusammenhang mit der Erfassung der Zugriffsberechtigung stehen muss.

Günstig ist es, wenn die Reinigungsvorrichtung mindestens einen ihr zugeordneten Berechtigungsträger mit darauf hinterlegter Zugriffsberechtigung umfasst. Der Berechtigungsträger kann wie vorstehend erläutert zum Betrieb der Reinigungsvorrichtung verwendet werden. Umfasst die Reinigungsvorrichtung eine Mehrzahl von ihr zugeordneten Berechtigungsträgern, ist es auf diese Weise möglich, einer Mehrzahl von Benutzern Zugriff auf die Reinigungsvorrichtung zu gewähren. Hierbei kann vorgesehen sein, dass sich die Zugriffsberechtigungen unterschiedlicher Berechtigungsträger hinsichtlich ihrer Berechtigungsstufen unterscheiden, wobei die unterschiedlichen Berechtigungsstufen betreffend die jeweilige Zugriffsberechtigung in einer Speichereinheit der Reinigungsvorrichtung gespeichert sind.

Es kann bei dem Vorhandensein mehrerer Reinigungsvorrichtungen auch möglich sein, dass ein Berechtigungsträger mit der auf ihm hinterlegten Zugriffsberechtigung Zugriff auf mehrere Reinigungsvorrichtungen gewährt.

Von Vorteil ist es, wenn der mindestens eine Berechtigungsträger als Transponder ausgebildet ist. Bei einem Transponder handelt es sich um eine Einrichtung, mit der ein eingehendes elektromagnetisches Signal erfasst und ein elektromagnetisches Signal abgestrahlt werden kann. Bei der Abstrahlung kann beispielsweise das eingehende Signal auf Basis der Zugriffsberechtigung modifiziert werden. Dies gibt die Möglichkeit, den mindestens einen Berechtigungsträger in Kombination mit einer Erfassungseinheit einzusetzen, welche eine Einrichtung zur Erfassung der Zugriffsberechtigung mittels elektromagnetischer Strahlung umfasst. Der Transponder ist insbesondere RFID-fähig und vorzugsweise zur Kommunikation mit einer NFC-Schnittstelle geeignet. Die vorstehend im Zusammenhang mit der Erläuterung der Erfassungseinheit beschriebenen Vorteile lassen sich damit unter Einsatz eines solchen Transponders erzielen. Bei dem Transponder kann es sich um einen aktiven oder um einen passiven Transponder handeln.

Bevorzugt weist der mindestens eine Berechtigungsträger ein Speicherglied auf, in dem der Zugriffsberechtigung zugeordnete Informationen betreffend einen bestimmten Benutzer, insbesondere betreffend eine Berechtigungsstufe des Benutzers und/oder ein Bedienprofil des Benutzers für die Reinigungsvorrichtung speicherbar sind. Auf diese Weise ist die Möglichkeit gegeben, eine Berechtigungsstufe des Benutzers und/oder ein Bedienprofil nach oder zusammen mit dem Erfassen der Zugriffsberechtigung mittels der Erfassungseinheit zu erfassen. Wie vorstehend erläutert, kann dabei die Art und Weise des Betriebes der Reinigungsvorrichtung vor dem eigentlichen Reinigungsbetrieb eingestellt werden und insbesondere an den Benutzer angepasst werden. Der Einsatz eines derartigen Berechtigungsträgers ist insbesondere dann von Vorteil, wenn dieser Zugriff auf mehr als nur eine Reinigungsvorrichtung gewährt. Sind Informationen betreffend den Benutzer, insbesondere dessen Berechtigungsstufe und dessen Bedienprofil auf dem mindestens einen Berechtigungsträger gespeichert, kann der Benutzer zum Beispiel eine Mehrzahl gleichartiger Reinigungsvorrichtungen mit identischen Einstellungen in Betrieb nehmen. Auf diese Weise bleibt ihm die jeweilige Einstellung einer Reinigungsvorrichtung erspart.

Günstig ist es, wenn die Reinigungsvorrichtung eine Aufnahme für den mindestens einen Berechtigungsträger aufweist. In der Aufnahme kann der mindestens eine Berechtigungsträger angeordnet werden und auf diese Weise eine definierte Relativposition zu der Reinigungsvorrichtung einnehmen. Insbesondere kann ein definierter Abstand des Berechtigungsträgers zu der Erfassungseinheit eingehalten werden, so dass eine zuverlässige Erfassung der Zugriffsberechtigung und gegebenenfalls weiterer auf dem Berechtigungsträger gespeicherter Informationen betreffend den Benutzer erfolgen kann. "Berührungsloses Erfassen" der Zugriffsberechtigung für die erfindungsgemäße Reinigungsvorrichtung schließt dementsprechend nicht aus, dass der Berechtigungsträger selbst in Kontakt mit der Reinigungsvorrichtung gelangt, insbesondere wenn er in der Aufnahme anordenbar ist.

Es kann vorgesehen sein, dass die Reinigungsvorrichtung eine Arretierungseinrichtung zur lösbaren Arretierung des mindestens einen Berechtigungsträgers in der Aufnahme umfasst. Die Arretierungseinrichtung ist bevorzugt als Klemmeinrichtung ausgestaltet.

Von Vorteil ist es, wenn die Aufnahme an der Bedieneinheit angeordnet ist. Typischerweise begibt sich ein Benutzer zur Inbetriebnahme der Reinigungsvorrichtung zur Bedieneinheit, so dass auf diese Weise eine benutzerfreundliche Inbetriebnahme der Reinigungsvorrichtung ermöglicht wird.

Bevorzugt umfasst die Reinigungsvorrichtung ein Aktivierungsglied, durch dessen Betätigung die Erfassungseinheit aktivierbar ist. Dies gibt die Möglichkeit, die Erfassungseinheit aus einem passiven Modus, in dem sie nicht zur Erfassung der Zugriffsberechtigung ausgelegt ist, in einen aktiven Modus zu schalten, in dem sie die Zugriffsberechtigung erfassen kann. Dadurch lässt sich vermeiden, dass die Erfassungseinheit dauerhaft im aktiven Modus betrieben werden muss. Die von der Reinigungsvorrichtung benötigte Energie kann auf diese Weise verringert werden.

Vorteilhafterweise ist das Aktivierungsglied mittels mindestens eines der Reinigungsvorrichtung zugeordneten Berechtigungsträgers betätigbar. Insbesondere kann vorgesehen sein, dass das Aktivierungsglied an der vorstehend beschriebenen Aufnahme für den mindestens einen Berechtigungsträger angeordnet ist und dann betätigt wird, wenn der mindestens eine Berechtigungsträger in der Aufnahme angeordnet wird. Ist dies der Fall, wird die Erfassungseinheit aktiviert und aus dem passiven Modus in den aktiven Modus überführt, um die auf dem mindestens einen Berechtigungsträger hinterlegte Zugriffsberechtigung zu erfassen. Wird in umgekehrter Weise der mindestens eine Berechtigungsträger aus der Aufnahme entfernt, so kann vorgesehen sein, dass das Aktivierungsglied erneut betätigt wird und die Reinigungsvorrichtung von der Steuereinheit sicherheitshalber außer Betrieb gestellt wird, insbesondere die mindestens eine Funktionseinheit deaktiviert wird und an der Bedieneinheit vorgenommene Bedienanweisungen ignoriert werden.

Um zu vermeiden, dass die Erfassungseinheit dauerhaft einen aktiven Modus einnimmt und zur Erfassung einer Zugriffsberechtigung bereit ist, kann auch vorgesehen sein, dass die Steuereinheit ein Zeitglied zur zeitabhängigen Ausgabe eines Aktivierungssignals an die Erfassungseinheit umfasst. Das Zeitglied kann von Zeit zu Zeit und insbesondere periodisch ein zur Übermittlung an die Erfassungseinheit vorgesehenes Aktivierungssignal ausgeben. Durch jedes Aktivierungssignal kann die Erfassungseinheit aktiviert werden, um festzustellen, ob von ihr eine Zugriffsberechtigung erfasst werden kann. Ist dies nicht möglich, so kann die Erfassungseinheit wieder in den passiven Modus zurückkehren.

Wie eingangs erwähnt, betrifft die Erfindung auch ein Verfahren zur Kontrolle des Zugriffs auf eine Reinigungsvorrichtung. Die eingangs gestellte Aufgabe wird erfindungsgemäß durch ein Verfahren mit den Merkmalen von Anspruch 12 gelöst.

Die Vorteile des erfindungsgemäßen Verfahrens wurden bereits im Zusammenhang mit der Erläuterung der erfindungsgemäßen Reinigungsvorrichtung erwähnt und können von diesem ebenfalls erzielt werden.

Vorteilhafterweise wird eine mit der Steuereinheit in Wirkverbindung stehende Speichereinheit ausgelesen, in der der Zugriffsberechtigung zugeordnete Informationen betreffend einen bestimmten Benutzer, insbesondere betreffend eine Berechtigungsstufe des Benutzers und/oder ein Bedienprofil des Benutzers für die Reinigungsvorrichtung gespeichert sind. Dadurch ist die Möglichkeit gegeben, in Abhängigkeit von der Zugriffsberechtigung einen bestimmten Benutzer zu identifizieren und insbesondere dessen Berechtigungsstufe und/oder dessen Bedienprofil zum Betrieb der Reinigungsvorrichtung aus der Speichereinheit auszulesen. Wie bereits im Zusammenhang mit der Erläuterung der Reinigungsvorrichtung erwähnt, kann damit ein auf die Berechtigung und die Erfordernisse des Benutzers angepasster Betrieb der Reinigungsvorrichtung ermöglicht werden.

Günstig ist es, wenn die Erfassungseinheit durch Betätigen eines Aktivierungsgliedes der Reinigungsvorrichtung aktiviert wird, denn auf diese Weise muss die Erfassungseinheit nicht dauerhaft in einem aktiven Modus betrieben werden, in dem sie die Zugriffsberechtigung erfassen kann.

Von Vorteil ist es, wenn das Aktivierungsglied mittels des Berechtigungsträgers betätigt wird. Dies kann beispielsweise dadurch geschehen, dass der Berechtigungsträger in einer ihm zugeordneten Aufnahme an der Reinigungsvorrichtung angeordnet wird, an der das Aktivierungsglied angeordnet ist.

Bevorzugt wird die auf dem Berechtigungsträger hinterlegte Zugriffsberechtigung mittels eines auf einer RFID-Technologie beruhenden Verfahrens erfasst. Hierbei handelt es sich um eine technisch einfache und zuverlässige Art und Weise, wie eine berührungslose Erfassung der Zugriffsberechtigung durch die Erfassungseinheit erfolgt. Insbesondere kann dabei die Erfassungseinheit als RFID-Lesegerät und/oder der Berechtigungsträger als aktiver oder passiver RFID-Transponder betrieben werden.

Günstig ist es, wenn als Übertragungsstandard zwischen der Erfassungseinheit und dem Berechtigungsträger ein NFC-Standard benutzt wird. Die Vorteile eines Einsatzes eines NFC-Standards, der auf der RFID-Technologie aufbaut, wurden bereits im Zusammenhang mit der Erläuterung einer Weiterbildung der erfindungsgemäßen Reinigungsvorrichtung, bei der die Erfassungseinheit eine NFC-Schnittstelle ausbildet, erwähnt, so dass auf die vorstehenden Ausführungen verwiesen werden kann.

Von Vorteil ist es, wenn nach positiver Überprüfung der Zugriffsberechtigung auf Gültigkeit in Abhängigkeit von der Zugriffsberechtigung der Aufbau einer Datenverbindung zwischen der Reinigungsvorrichtung und einer externen Kommunikationsvorrichtung zur Wartung der Reinigungsvorrichtung ermöglicht wird. Auf diese Weise wird eine Wartung der Reinigungsvorrichtung ermöglicht, nachdem eine von der Erfassungseinheit erfasste Zugriffsberechtigung positiv auf ihre Gültigkeit überprüft wurde. Dabei wurde ermittelt, dass der mit dem Berechtigungsträger ausgestattete Benutzer zur Wartung der Reinigungsvorrichtung berechtigt ist. Dementsprechend kann in einer Speichereinheit der Reinigungsvorrichtung und/oder in einem Speicherglied des Berechtigungsträgers die erforderliche mit der Zugriffsberechtigung verknüpfte Berechtigungsstufe des Benutzers gespeichert sein. Eine Wartung der Reinigungsvorrichtung kann somit erst dann zugelassen werden, wenn sich der Benutzer als zur Wartung berechtigter Benutzer ausgewiesen hat.

Vorzugsweise wird die Datenverbindung drahtlos zwischen der Reinigungsvorrichtung und der Kommunikationsvorrichtung unter Einsatz der Erfassungseinheit aufgebaut. Auf diese Weise dient die Erfassungseinheit nicht nur zur Erfassung der Zugriffsberechtigung, sondern sie definiert auch eine "Wartungsschnittstelle" zur Wartung der Reinigungsvorrichtung. Über diese Schnittstelle kann eine drahtlose und insbesondere auf elektromagnetischer Strahlung basierende Datenverbindung aufgebaut werden. Hierbei kann es sich zum Beispiel um eine Verbindung auf Basis des NFC-Standards, um eine Verbindung unter Einsatz eines "Bluetooth"-Standards oder um eine Verbindung unter Einsatz unter WLAN-Standards handeln. Der Aufbau der drahtlosen Datenverbindung unter Einsatz eines "Bluetooth"-Standards oder eines WLAN-Standards bietet gegenüber dem NFC-Standard für den Fall der Wartung den Vorteil, dass für den Datenaufbau ein Austausch eines Erkennungscodes zwischen der Erfassungseinheit und der externen Kommunikationsvorrichtung erforderlich ist und somit eine zusätzliche Sicherheitsüberprüfung vorgenommen wird. Ferner wird mittels einer "Bluetooth"- oder WLAN-Technologie eine höhere Datenübertragungsrate zwischen der Reinigungsvorrichtung und der Kommunikationsvorrichtung ermöglicht, als dies beim Einsatz einer NFC-Technologie der Fall ist. Bei der Wartung kann es erforderlich sein, dass umfangreiche Datenmengen ausgetauscht werden, zum Beispiel wenn auf die Reinigungsvorrichtung eine neue oder aktualisierte für ihren Betrieb erforderliche Software übertragen werden muss. Demgegenüber liegt der Vorteil einer NFC-basierten Datenverbindung in deren kürzerer Reichweite und deren schnellerem Aufbau.

Die nachfolgende Beschreibung einer bevorzugten Ausführungsform der Erfindung dient im Zusammenhang mit der Zeichnung der näheren Erläuterung der Erfindung. Es zeigen:
- Figur 1:: eine perspektivische Ansicht einer erfindungsgemäßen Reinigungsvorrichtung;
- Figur 2:: eine Draufsicht auf eine Bedieneinheit der Reinigungsvorrichtung aus Figur 1 und
- Figur 3:: ein Blockschaltbild elektrisch wirksamer Komponenten der Reinigungsvorrichtung aus Figur 1.

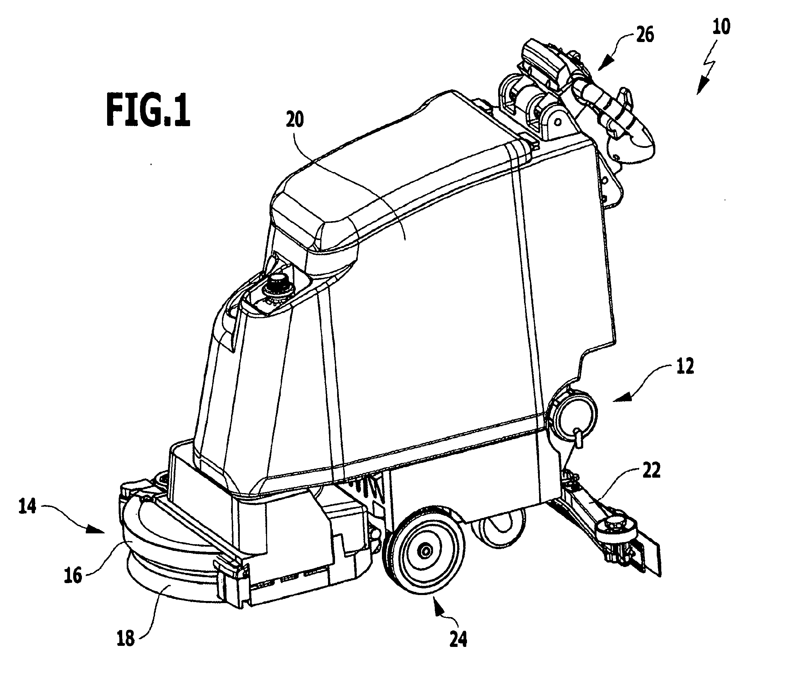

Eine bevorzugte Ausführungsform einer erfindungsgemäßen Reinigungsvorrichtung ist als in Figur 1 perspektivisch dargestellte Scheuersaugmaschine ausgebildet, die dort mit dem Bezugszeichen 10 belegt ist. Bei der Scheuersaugmaschine 10 handelt es sich um eine sogenannte "Walk-behind"-Maschine, die ein Benutzer von ihrer Rückseite 12 steuert.

An ihrer Vorderseite 14 weist die Scheuersaugmaschine 10 ein Reinigungswerkzeug 16 auf mit einer rotierenden Tellerbürste 18, mit der Verschmutzungen von einer zu reinigenden Bodenfläche abgelöst werden können. Zur Steigerung der Reinigungswirkung wird die zu reinigende Fläche mit einer in einem Tank 20 der Scheuersaugmaschine 10 enthaltenen Reinigungsflüssigkeit, vorzugsweise Wasser, beaufschlagt.

An ihrer Rückseite 12 umfasst die Scheuersaugmaschine 10 eine Schmutzaufnahmevorrichtung 22 zum Aufsaugen abgelösten Schmutzes und Wassers von der Bodenfläche.

Die Schmutzaufnahmevorrichtung 22 und das Reinigungswerkzeug 16 sind Funktionseinheiten der Scheuersaugmaschine 10. Über diese Funktionseinheiten hinaus weist die Scheuersaugmaschine 10 eine weitere Funktionseinheit in Form eines an sich bekannten und in der Zeichnung nicht dargestellten Antriebs für ein Fahrwerk 24 der Scheuersaugmaschine 10 auf.

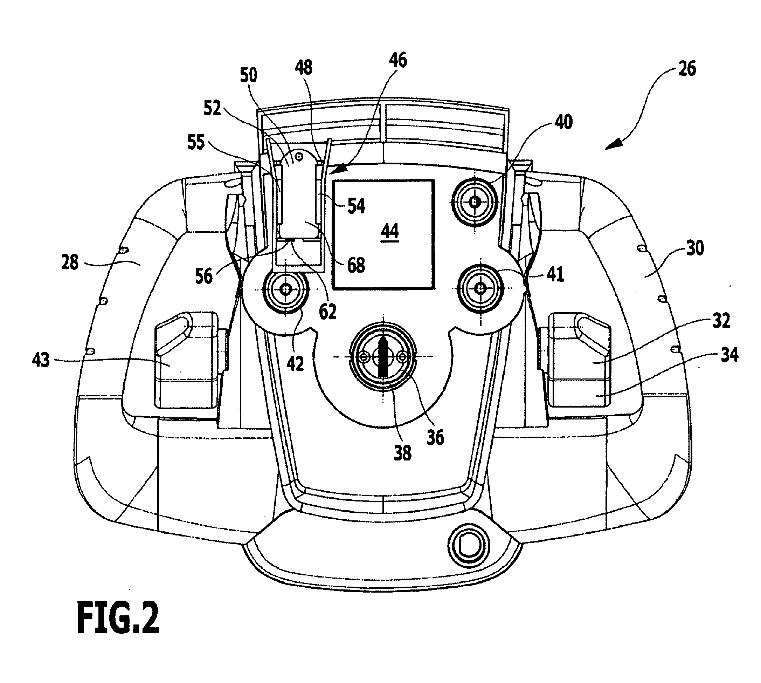

Zur Entgegennahme von Bedienanweisungen umfasst die Scheuersaugmaschine 10 eine an der Rückseite 12 angeordnete Bedieneinheit 26. Diese ist in Figur 2 in Draufsicht dargestellt. Sie weist einen linken Handgriff 28 und einen rechten Handgriff 30 auf, die zum Steuern der Scheuersaugmaschine 10 dienen und auch zu deren Schieben eingesetzt werden können.

Des Weiteren umfasst die Bedieneinheit 26 ein Betätigungsglied 32 in Form eines Kipphebels 34 zur Vorgabe der Fahrgeschwindigkeit durch einen Benutzer. Mittels eines weiteren Betätigungsgliedes 36 in Form eines Programmwahlschalters 38 ist ein auf die zu reinigende Bodenfläche zugeschnittenes Reinigungsprogramm der Scheuersaugmaschine 10 durch einen Benutzer vorgebbar. Darüber hinaus weist die Bedieneinheit 26 weitere Betätigungsglieder 40, 41, 42 und 43, auf die nachfolgend nicht näher eingegangen wird, zur Entgegennahme von Bedienanweisungen durch einen Benutzer auf. Ferner umfasst die Bedieneinheit 26 eine Anzeigeeinrichtung 44, mit der Informationen den Zustand der Scheuersaugmaschine 10 betreffend darstellbar sind.

Neben der Anzeigeeinrichtung 44 ist eine Aufnahme 46 in Form eines Einschubschachtes 48 angeordnet. In der Aufnahme 46 kann ein Berechtigungsträger 50 der Scheuersaugmaschine 10 entfernbar angeordnet werden. Der Berechtigungsträger 50 ist ausgestaltet in Form einer Berechtigungskarte 52 im Scheckkartenformat, die in den Einschubschacht 48 hinein geschoben werden kann und in diesem mittels sie übergreifender Leisten 54 und 55 verklemmt werden kann. Die Leisten 54 und 55 definieren auf diese Weise eine Arretierungseinrichtung für die Berechtigungskarte 52, welche diese gegen unerwünschtes Herausfallen aus der Aufnahme 46 sichert.

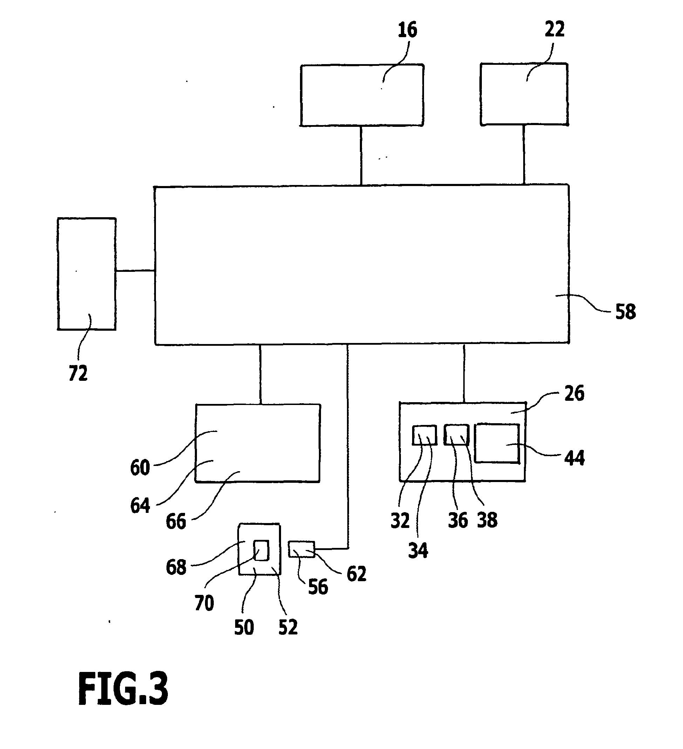

Mittels eines Schalters 56, insbesondere in Form eines Mikroschalters, der an der Aufnahme 46 angeordnet ist, kann detektiert werden, ob sich die Berechtigungskarte 52 in der Aufnahme 46 befindet. Der Schalter 56 steht mit einer Steuereinheit 58 der Scheuersaugmaschine 10 in elektrischer Verbindung, die außerdem mit dem Reinigungswerkzeug 16, der Schmutzaufnahmevorrichtung 22, der Bedieneinheit 26 sowie (in Figur 3 nicht gezeigt) mit dem Antrieb der Scheuersaugmaschine 10 in Wirkverbindung steht.

Die Steuereinheit 58 dient zum Entgegennehmen von an der Bedieneinheit 26 vorgenommenen Bedienanweisungen, insbesondere von an den Betätigungsgliedern 32 und 36 sowie 40 bis 43 vorgenommenen Bedienanweisungen, wovon die Betätigungsglieder 40 bis 43 in Figur 3 nicht dargestellt sind. Die Steuereinheit 58 kann auf Basis der Bedienanweisungen die Funktionseinheiten der Scheuersaugmaschine 10 ansteuern.

Ist in der Aufnahme 46 die Berechtigungskarte 52 angeordnet, wird der Schalter 56 aktiviert und übermittelt dies der Steuereinheit 58, die daraufhin eine mit ihr in Wirkverbindung stehende Erfassungseinheit 60 aktiviert. Aus diesem Grund wird der Schalter 56 auch als Aktivierungsglied 62 bezeichnet.

Die Erfassungseinheit 60 ist unterhalb einer die Bedieneinheit 26 obenseitig begrenzenden Abdeckung angeordnet und nimmt zu der Aufnahme 46 einen Abstand von wenigen Zentimetern ein. In physischer Hinsicht ist die Erfassungseinheit 60 somit in die Bedieneinheit 26 integriert, wobei sie insbesondere auf demselben Träger festgelegt sein kann wie zum Beispiel die Anzeigeeinrichtung 44, insbesondere auf derselben Platine.

Die Erfassungseinheit 60 ist als Einrichtung zum Aussenden und Erfassen elektromagnetischer Strahlung ausgebildet und bildet insbesondere ein RFID-Lesegerät 64. Mit diesem RFID-Lesegerät 64 kann ferner eine Datenverbindung basierend auf einem NFC-Standard aufgebaut werden (NFC = "Near Field Communication"). Daher bildet die Erfassungseinheit 60 auch eine NFC-Schnittstelle 66 der Scheuersaugmaschine 10 aus.

Die Berechtigungskarte 52 ist als RFID-fähiger passiver Transponder 68 ausgebildet. Es kann vorgesehen sein, dass sie ebenfalls zum Eingehen einer NFC-basierten Datenaustauschverbindung ausgelegt ist.

Wird die Erfassungseinheit 60 bei in der Aufnahme 46 angeordneter Berechtigungskarte 52 aktiviert, ist es der Erfassungseinheit 60 möglich, eine in einem Speicherglied 70 der Berechtigungskarte 52 hinterlegte Zugriffsberechtigung in Form eines Identifikationscodes für die Scheuersaugmaschine 10 berührungslos zu erfassen. Die Erfassung erfolgt dabei anhand einer RFID-Technologie mittels elektromagnetischer Strahlung, die von der Erfassungseinheit 60 ausgesendet und die auf Basis der im Speicherglied 70 hinterlegten Zugriffsberechtigung so modifiziert wird, dass dies von der Erfassungseinheit 60 detektiert werden kann.

Die von der Erfassungseinheit 60 erfasste Zugriffsberechtigung wird der Steuereinheit 58 übermittelt, die mit einer Speichereinheit 72 der Scheuersaugmaschine 10 in Wirkverbindung steht, in welcher Informationen betreffend mögliche Benutzer der Scheuersaugmaschine 10 gespeichert sind. Die Speichereinheit 72 wird von der Steuereinheit 58 daraufhin ausgelesen, ob die in der Berechtigungskarte 52 gespeicherte und von der Erfassungseinheit 60 erfasste Zugriffsberechtigung einen Zugriff auf die Scheuersaugmaschine 10 erlaubt. Ist dies der Fall, kann der die Berechtigungskarte 52 innehabende Benutzer von der Steuereinheit 58 identifiziert werden und die Scheuersaugmaschine 10 in Betrieb nehmen.

In der Speichereinheit 72 sind ferner in Abhängigkeit von darin gespeicherten Zugriffsberechtigungen Informationen betreffend die jeweilige Berechtigungsstufe des Benutzers und ein jeweiliges Bedienprofil des Benutzers für die Scheuersaugmaschine 10 gespeichert. Auf diese Weise ist mittels der Steuereinheit 58 nach dem Auslesen der Speichereinheit 72 erkennbar, welche Berechtigungsstufe der die Berechtigungskarte 52 innehabende Benutzer hat. Beispielsweise kann eine Berechtigungsstufe für normales Reinigungspersonal vergeben werden und eine weitere Berechtigungsstufe für Service- oder Wartungspersonal. Dementsprechend kann vorgesehen sein, dass der Benutzer bestimmte Funktionen der Funktionseinheiten der Scheuersaugmaschine 10 nicht oder nur eingeschränkt ausführen kann.

Anhand des aus der Speichereinheit 72 ausgelesenen Bedienprofils für den die Berechtigungskarte 52 innehabenden Benutzer kann die Steuereinheit 58 ferner vor der Aufnahme des Reinigungsbetriebes Voreinstellungen vornehmen, die an den Benutzer angepasst sind. Beispielsweise können Statusinformationen betreffend die Scheuersaugmaschine 10 in einer dem Benutzer vertrauten Sprache an der Anzeigeeinrichtung 44 angezeigt werden. Es kann auch vorgesehen sein, dass zum Beispiel das Reinigungswerkzeug 16 und die Schmutzaufnahmevorrichtung 22 sowie der Antrieb der Scheuersaugmaschine 10 an die Beschaffenheit der vom erkannten Benutzer üblicherweise gereinigten Bodenfläche angepasst werden.

Es ist möglich, dass in der Speichereinheit 72 der Zugriffsberechtigung zugeordnete Informationen betreffend den Benutzer modifizierbar speicherbar sind. So können der Speichereinheit 72 neue "erlaubte" Zugriffsberechtigungen für den Betrieb der Scheuersaugmaschine 10 hinzugefügt werden oder in der Speichereinheit 72 gespeicherte Zugriffsberechtigungen aus dieser wieder gelöscht werden. In ähnlicher Weise kann die einer gespeicherten Zugriffsberechtigung zugeordnete Information betreffend eine Berechtigungsstufe und/oder ein Bedienprofil des Benutzers modifizierbar sein.

Auch in dem Speicherglied 70 der Berechtigungskarte 52 können der darin gespeicherten Zugriffsberechtigung zugeordnete Informationen betreffend eine Berechtigungsstufe und ein Bedienprofil des Benutzers modifizierbar gespeichert werden. Dies gibt die Möglichkeit, die Berechtigungskarte 52 mit einer Mehrzahl von zu der Scheuersaugmaschine 10 gleichartig ausgebildeten Scheuersaugmaschinen zu verwenden, ohne dass der Benutzer jede Scheuersaugmaschine gesondert für den Betrieb einstellen muss. Stattdessen können die auf der Berechtigungskarte 52 gespeicherten Informationen zusammen mit der Erfassung der Zugriffsberechtigung durch die jeweilige Erfassungseinheit 60 ausgelesen werden.

Die Möglichkeit, die auf der Berechtigungskarte 52 gespeicherte Zugriffsberechtigung für die Scheuersaugmaschine 10 berührungslos mittels der Erfassungseinheit 60 zu erfassen, ermöglicht eine benutzerfreundliche Inbetriebnahme der Scheuersaugmaschine 10. Durch ergänzende Speicherung von der Zugriffsberechtigung zugeordneten Informationen, beispielsweise in der Speichereinheit 72 oder im Speicherglied 70, kann ferner auf einfache Weise eine Anpassung der Scheuersaugmaschine 10 an die Berechtigungsstufe und das Bedienprofil des Benutzers vorgenommen werden.

Zur Wartung der Scheuersaugmaschine 10 kann vorgesehen sein, dass nach erfolgreicher positiver Überprüfung der Zugriffsberechtigung durch die Steuereinheit 58 über die Erfassungseinheit 60 eine drahtlose Datenverbindung zu einer externen Kommunikationsvorrichtung aufgebaut wird. Dabei ist es möglich, dass eine Wartung erst dann erfolgen kann, wenn anhand der auf der Berechtigungskarte 52 gespeicherten Zugriffsberechtigung durch die Steuereinheit 58 feststellbar ist, dass es sich bei dem Benutzer um Wartungspersonal handelt.

Die Datenverbindung zwischen der Erfassungseinheit 60 und der externen Kommunikationsvorrichtung kann beispielsweise mittels eines NFC-Standards durch die NFC-Schnittstelle 66 erfolgen. Es ist auch möglich, dass die Erfassungseinheit 60 zusätzliche Übertragungsstandards beherrscht, beispielsweise "Bluetooth" oder WLAN. Letztgenannte Standards bieten sich dann an, wenn zwischen der Scheuersaugmaschine 10 und der Kommunikationsvorrichtung größere Datenmengen zu übertragen sind, etwa dann, wenn auf die Scheuersaugmaschine 10 eine für ihren Betrieb erforderliche Software übertragen werden muss.

## Patentansprüche

1. Reinigungsvorrichtung (10), umfassend eine Bedieneinheit (26) zur Bedienung der Reinigungsvorrichtung (10), mindestens eine Funktionseinheit zur Ausführung einer Bedienanweisung, welche mindestens eine Funktionseinheit als Reinigungswerkzeug, als Antriebseinrichtung oder als Reinigungsmitteldosiereinrichtung ausgestaltet ist, sowie eine Steuereinheit (58) zum Entgegennehmen von an der Bedieneinheit (26) vorgenommenen Bedienanweisungen und darauf basierender Ansteuerung der mindestens einen Funktionseinheit, wobei zum Betrieb der Reinigungsvorrichtung (10) eine auf einem Berechtigungsträger (50) hinterlegte Zugriffsberechtigung erforderlich ist, wobei die Reinigungsvorrichtung (10) eine mit der Steuereinheit (58) in Wirkverbindung stehende Erfassungseinheit (60) aufweist, die zum berührungslosen Erfassen der Zugriffsberechtigung und zu deren Übermittlung an die Steuereinheit (58) ausgebildet ist, und dass mittels der Steuereinheit (58) die Zugriffsberechtigung auf Gültigkeit überprüfbar ist.

2. Reinigungsvorrichtung nach Anspruch 1, **dadurch gekennzeichnet, dass** die Reinigungsvorrichtung (10) eine mit der Steuereinheit (58) in Wirkverbindung stehende Speichereinheit (72) umfasst, in der der Zugriffsberechtigung zugeordnete Informationen betreffend den Benutzer speicherbar sind zur Zuordnung der Zugriffsberechtigung zu einem bestimmten Benutzer durch die Steuereinheit (58).

3. Reinigungsvorrichtung nach einem der voranstehenden Ansprüche, **dadurch gekennzeichnet, dass** die Erfassungseinheit (60) eine Einrichtung (60) zur Erfassung der Zugriffsberechtigung mittels elektromagnetischer Strahlung umfasst.

4. Reinigungsvorrichtung nach Anspruch 3, **dadurch gekennzeichnet, dass** die Einrichtung (60) als RFID-Lesegerät (64) ausgebildet ist.

5. Reinigungsvorrichtung nach Anspruch 3 oder 4, **dadurch gekennzeichnet, dass** die Einrichtung (60) eine NFC-Schnittstelle (66) ausbildet.

6. Reinigungsvorrichtung nach einem der voranstehenden Ansprüche, **dadurch gekennzeichnet, dass** die Reinigungsvorrichtung (10) mindestens einen ihr zugeordneten Berechtigungsträger (50) mit darauf hinterlegter Zugriffsberechtigung umfasst.

7. Reinigungsvorrichtung nach Anspruch 6, **dadurch gekennzeichnet, dass** der mindestens eine Berechtigungsträger (50) ein Speicherglied (70) aufweist, in dem der Zugriffsberechtigung zugeordnete Informationen betreffend einen bestimmten Benutzer, insbesondere betreffend eine Berechtigungsstufe des Benutzers und/oder ein Bedienprofil des Benutzers für die Reinigungsvorrichtung (10) speicherbar sind.

8. Reinigungsvorrichtung nach Anspruch 6 oder 7, **dadurch gekennzeichnet, dass** die Reinigungsvorrichtung (10) eine Aufnahme (46) für den mindestens einen Berechtigungsträger (50) aufweist.

9. Reinigungsvorrichtung nach einem der voranstehenden Ansprüche, **dadurch gekennzeichnet, dass** die Reinigungsvorrichtung (10) ein Aktivierungsglied (62) umfasst, durch dessen Betätigung die Erfassungseinheit (60) aktivierbar ist.

10. Reinigungsvorrichtung nach Anspruch 9, **dadurch gekennzeichnet, dass** das Aktivierungsglied (62) mittels mindestens eines der Reinigungsvorrichtung (10) zugeordneten Berechtigungsträgers (50) betätigbar ist.

11. Reinigungsvorrichtung nach einem der voranstehenden Ansprüche, **dadurch gekennzeichnet, dass** die Steuereinheit (58) ein Zeitglied zur zeitabhängigen Ausgabe eines Aktivierungssignals an die Erfassungseinheit (60) umfasst.

12. Verfahren zur Kontrolle des Zugriffs auf eine Reinigungsvorrichtung, wobei die Reinigungsvorrichtung eine Bedieneinheit zur Bedienung der Reinigungsvorrichtung und mindestens eine Funktionseinheit zur Ausführung einer Bedienanweisung umfasst, welche mindestens eine Funktionseinheit als Reinigungswerkzeug, als Antriebseinrichtung oder als Reinigungsmitteldosiereinrichtung ausgestaltet ist, wobei die Reinigungsvorrichtung ferner eine Steuereinheit zum Entgegennehmen von an der Bedieneinheit vorgenommenen Bedienanweisungen und darauf basierender Ansteuerung der mindestens einen Funktionseinheit umfasst und wobei zum Betrieb der Reinigungsvorrichtung eine auf einem Berechtigungsträger hinterlegte Zugriffsberechtigung erforderlich ist, wobei mittels einer mit der Steuereinheit in Wirkverbindung stehenden Erfassungseinheit der Reinigungsvorrichtung eine Zugriffsberechtigung berührungslos erfasst und an die Steuereinheit übermittelt wird und von dieser die Zugriffsberechtigung auf Gültigkeit überprüft wird.

13. Verfahren nach Anspruch 12, **dadurch gekennzeichnet, dass** eine mit der Steuereinheit in Wirkverbindung stehende Speichereinheit ausgelesen wird, in der der Zugriffsberechtigung zugeordnete Informationen betreffend einen bestimmten Benutzer, insbesondere betreffend eine Berechtigungsstufe des Benutzers und/oder ein Bedienprofil des Benutzers für die Reinigungsvorrichtung gespeichert sind.

14. Verfahren nach Anspruch 12 oder 13, **dadurch gekennzeichnet, dass** die Erfassungseinheit durch Betätigen eines Aktivierungsgliedes der Reinigungsvorrichtung aktiviert wird.

15. Verfahren nach Anspruch 14, **dadurch gekennzeichnet, dass** das Aktivierungsglied mittels des Berechtigungsträgers betätigt wird.

16. Verfahren nach einem der Ansprüche 12 bis 15, **dadurch gekennzeichnet, dass** die auf dem Berechtigungsträger hinterlegte Zugriffsberechtigung mittels eines auf einer RFID-Technologie beruhenden Verfahrens erfasst wird.

17. Verfahren nach einem der Ansprüche 12 bis 16, **dadurch gekennzeichnet, dass** nach positiver Überprüfung der Zugriffsberechtigung auf Gültigkeit in Abhängigkeit von der Zugriffsberechtigung der Aufbau einer Datenverbindung zwischen der Reinigungsvorrichtung und einer externen Kommunikationsvorrichtung zur Wartung der Reinigungsvorrichtung ermöglicht wird.

## Claims

1. Cleaning apparatus (10), comprising an operating unit (26) for operating the cleaning apparatus (10), at least one functional unit for carrying out an operating instruction, which at least one functional unit is configured as cleaning tool, as drive device or as cleaning agent metering device, as well as a control unit (58) for receiving operating instructions performed on the operating unit (26) and controlling the at least one functional unit based on said operating instructions, wherein an access authorization stored on an authorization carrier (50) is required in order to operate the cleaning apparatus (10), wherein the cleaning apparatus (10) has a detection unit (60) operatively connected to the control unit (58) and configured for contactless detection of the access authorization and transmission thereof to the control unit (58), and wherein the access authorization is verifiable for its validity by the control unit (58).

2. Cleaning apparatus in accordance with claim 1, **characterised in that** the cleaning apparatus (10) comprises a storage unit (72) which is operatively connected to the control unit (58) and in which information associated with the access authorization and related to the user is storable for associating the access authorization with a specific user by the control unit (58).

3. Cleaning apparatus in accordance with any one of the preceding claims, **characterised in that** the detection unit (60) comprises a device (60) for detecting the access authorization by electromagnetic radiation.

4. Cleaning apparatus in accordance with claim 3, **characterised in that** the device (60) is configured as an RFID reading device (64).

5. Cleaning apparatus in accordance with claim 3 or 4, **characterised in that** the device (60) forms an NFC interface (66).

6. Cleaning apparatus in accordance with any one of the preceding claims, **characterised in that** the cleaning apparatus (10) comprises at least one authorization carrier (50) associated therewith and having an access authorization stored thereon.

7. Cleaning apparatus in accordance with claim 6, **characterised in that** the at least one authorization carrier (50) has a storage member (70) in which information associated with the access authorization and related to a specific user, in particular related to an authorization level of the user and/or an operating profile of the user for the cleaning apparatus (10) is storable.

8. Cleaning apparatus in accordance with claim 6 or 7, **characterised in that** the cleaning apparatus (10) has a receptacle (46) for the at least one authorization carrier (50).

9. Cleaning apparatus in accordance with any one of the preceding claims, **characterised in that** the cleaning apparatus (10) comprises an activating member (62), the detection unit (60) being activatable by actuating said activating member.

10. Cleaning apparatus in accordance with claim 9, **characterised in that** the activating member (62) is actuatable by at least one authorization carrier (50) associated with the cleaning apparatus (10).

11. Cleaning apparatus in accordance with any one of the preceding claims, **characterised in that** the control unit (58) comprises a timing member for time-dependent output of an activating signal to the detection unit (60).

12. Method for controlling access to a cleaning apparatus, wherein the cleaning apparatus comprises an operating unit for operating the cleaning apparatus and at least one functional unit for carrying out an operating instruction, which at least one functional unit is configured as cleaning tool, as drive device or as cleaning agent metering device, the cleaning apparatus further comprising a control unit for receiving operating instructions performed on the operating unit and controlling the at least one functional unit based on said operating instructions, and wherein an access authorization stored on an authorization carrier is required in order to operate the cleaning apparatus, wherein, by a detection unit of the cleaning apparatus which is operatively connected to the control unit, an access authorization is detected in a contactless manner and is transmitted to the control unit, and in that the access authorization is verified for its validity by said control unit.

13. Method in accordance with claim 12, **characterised in that** a storage unit operatively connected to the control unit is read, said storage unit storing information associated with the access authorization and related to a specific user, in particular related to an authorization level of the user and/or an operating profile of the user for the cleaning apparatus.

14. Method in accordance with claim 12 or 13, **characterised in that** the detection unit is activated by actuating an activating member of the cleaning apparatus.

15. Method in accordance with claim 14, **characterised in that** the activating member is actuated by the authorization carrier.

16. Method in accordance with any one of claims 12 to 15, **characterised in that** the access authorization stored on the authorization carrier is detected by a method based on an RFID technology.

17. Method in accordance with any one of claims 12 to 16, **characterised in that**, following positive verification of the access authorization in terms of its validity, a data connection between the cleaning apparatus and an external communication device is allowed to be established as a function of the access authorization for maintenance of the cleaning apparatus.

## Revendications

1. Dispositif de nettoyage (10) comprenant une unité de commande (26) pour commander le dispositif de nettoyage (10), au moins une unité fonctionnelle pour exécuter une indication de commande, ladite au moins une unité fonctionnelle étant conçue comme un outil de nettoyage, un système d'entraînement ou un système de dosage d'agent nettoyant, ainsi qu'une unité de contrôle (58) pour recevoir des indications de commande introduites sur l'unité de commande (26) et pour contrôler sur cette base ladite au moins une unité fonctionnelle, une autorisation d'accès conservée sur un support d'autorisation (50) étant nécessaire pour utiliser le dispositif de nettoyage (10), le dispositif de nettoyage (10) comprenant une unité de détection (60) coopérant avec l'unité de contrôle (58) et configurée pour détecter sans contact l'autorisation d'accès et la transmettre à l'unité de contrôle (58), et la validité de l'autorisation d'accès pouvant être contrôlée au moyen de l'unité de contrôle (58).

2. Dispositif de nettoyage selon la revendication 1, **caractérisé en ce que** le dispositif de nettoyage (10) comprend une unité de mémorisation (72) coopérant avec l'unité de contrôle (58) et dans laquelle des informations affectées à l'autorisation d'accès concernant l'utilisateur peuvent être mémorisées pour affecter l'autorisation d'accès à un utilisateur déterminé par le biais de l'unité de contrôle (58).

3. Dispositif de nettoyage selon l'une quelconque des revendications précédentes, **caractérisé en ce que** l'unité de détection (60) comprend un appareil (60) destiné à détecter l'autorisation d'accès au moyen de rayonnement électromagnétique.

4. Dispositif de nettoyage selon la revendication 3, **caractérisé en ce que** l'appareil (60) est conçu comme un lecteur RFID (64).

5. Dispositif de nettoyage selon la revendication 3 ou 4, **caractérisé en ce que** l'appareil (60) forme une interface NFC (66).

6. Dispositif de nettoyage selon l'une quelconque des revendications précédentes, **caractérisé en ce que** le dispositif de nettoyage (10) comprend au moins un support d'autorisation (50) lui étant affecté et conservant l'autorisation d'accès.

7. Dispositif de nettoyage selon la revendication 6, **caractérisé en ce que** ledit au moins un support d'autorisation (50) comprend un organe de mémorisation (70) dans lequel peuvent être mémorisées des informations affectées à l'autorisation d'accès concernant un utilisateur déterminé, concernant en particulier un niveau d'autorisation de l'utilisateur et/ou un profil de commande de l'utilisateur pour le dispositif de nettoyage (10).

8. Dispositif de nettoyage selon la revendication 6 ou 7, **caractérisé en ce que** le dispositif de nettoyage (10) comprend un logement (46) pour ledit au moins un support d'autorisation (50).

9. Dispositif de nettoyage selon l'une quelconque des revendications précédentes, **caractérisé en ce que** le dispositif de nettoyage (10) comprend un organe d'activation (62) dont l'actionnement permet d'activer l'unité de détection (60).

10. Dispositif de nettoyage selon la revendication 9, **caractérisé en ce que** l'organe d'activation (62) peut être actionné au moyen d'au moins un support d'autorisation (50) affecté au dispositif de nettoyage (10).

11. Dispositif de nettoyage selon l'une quelconque des revendications précédentes, **caractérisé en ce que** l'unité de contrôle (58) comprend un organe de temporisation destiné à la délivrance programmée dans le temps d'un signal d'activation à l'unité de détection (60).

12. Procédé pour contrôler l'accès à un dispositif de nettoyage, le dispositif de nettoyage comprenant une unité de commande pour commander le dispositif de nettoyage et au moins une unité fonctionnelle pour exécuter une indication de commande, ladite au moins une unité fonctionnelle étant conçue comme un outil de nettoyage, un système d'entraînement ou un système de dosage d'agent nettoyant, le dispositif de nettoyage comprenant en outre une unité de contrôle pour recevoir des indications de commande introduites sur l'unité de commande et pour contrôler sur cette base ladite au moins une unité fonctionnelle, et une autorisation d'accès conservée sur un support d'autorisation étant nécessaire pour utiliser le dispositif de nettoyage, une autorisation d'accès étant détectée sans contact au moyen d'une unité de détection du dispositif de nettoyage coopérant avec l'unité de contrôle et transmise à l'unité de contrôle et la validité de l'autorisation d'accès étant contrôlée au moyen de ladite unité de contrôle.

13. Procédé selon la revendication 12, **caractérisé en ce qu'**une unité de mémorisation coopérant avec l'unité de contrôle est lue, dans ladite unité de mémorisation étant mémorisés des informations affectées à l'autorisation d'accès concernant un utilisateur défini, concernant en particulier un niveau d'autorisation de l'utilisateur et/ou un profil de commande de l'utilisateur pour le dispositif de nettoyage.

14. Procédé selon la revendication 12 ou 13, **caractérisé en ce que** l'unité de détection est activée par l'actionnement d'un organe d'activation du dispositif de nettoyage.

15. Procédé selon la revendication 14, **caractérisé en ce que** l'organe d'activation est actionné au moyen du support d'autorisation.

16. Procédé selon l'une quelconque des revendications 12 à 15, **caractérisé en ce que** l'autorisation d'accès conservée sur le support d'autorisation est détectée au moyen d'un procédé reposant sur une technologie RFID.

17. Procédé selon l'une quelconque des revendications 12 à 16, **caractérisé en ce qu'**une fois la validité de l'autorisation d'accès contrôlée positivement, l'établissement d'une liaison de données entre le dispositif de nettoyage et un dispositif de communication externe pour l'entretien du dispositif de nettoyage est permis en fonction de l'autorisation d'accès.
